# EUROPEAN PATENT SPECIFICATION

(11) **EP 2 172 349 B1**
(45) Date of publication and mention of the grant of the patent: **27.03.2013**
(21) Application number: 08791706.8
(22) Date of filing: 18.07.2008
(51) Int. Cl.: B60C 1/00, C08L 23/22, C08L 21/00, B60C 5/14, B29D 30/30, B32B 25/08, B32B 25/12, C08L 7/00, C08L 15/00, C08L 93/00

(54) **Pneumatic tire with protective layer**
Luftreifen mit Schutzschicht
Pneu pneumatique avec couche de protection

(30) Priority: 23.07.2007 JP 2007191224
(43) Date of publication of application: 07.04.2010
(73) Proprietor: The Yokohama Rubber Co., Ltd., Minato-ku Tokyo 105-8685 (JP)
(72) Inventor: KIRINO, Yoshiaki, Hiratsuka-shi Kanagawa 254-8601 (JP)
(74) Representative: Vossius & Partner
(86) International application number: PCT/JP2008/063468
(87) International publication number: WO 2009/014232

(56) References cited:
- WO-A1-2007/037541
- WO-A1-2007/081323
- WO-A2-2007/070728
- JP-A- 08 132 553
- JP-A- 09 314 752
- JP-A- 10 176 109
- JP-A- 2005 263 856
- JP-A- 2006 224 854
- JP-A- 2007 098 843
- DATABASE WPI Week 200663 Thomson Scientific, London, GB; AN 2006-606610 XP002622363, & JP 2006 224854 A (YOKOHAMA RUBBER CO LTD) 31 August 2006 (2006-08-31)
- DATABASE WPI Week 200729 Thomson Scientific, London, GB; AN 2007-296852 XP002622364, -& JP 2007 050614 A (YOKOHAMA RUBBER CO LTD) 1 March 2007 (2007-03-01)

## Description

The present invention relates to a pneumatic tire, more particularly relates to a pneumatic tire utilizing a film liner, as an inner liner layer, which pneumatic tire has a protective layer laminated on an inner surface of the film liner.

WO 2007/070728 A2 relates to a vulcanizable layered composition comprising at least two layers and at least one tie layer. The first of the two layers comprises a fluid permeation prevention layer and the second comprises at least one high diene rubber. The tie layer comprises suitable amounts of epoxidized natural rubber, at least one high diene elastomer, at least one filler, at least one tackifier, and a rubber curing system. The fluid permeation prevention layer preferably comprises at least one thermoplastic engineering resin component and at least one elastomer component.

JP 2006 224854 A relates to a laminated body capable of being used as an inner liner, a carcass layer and/or a tire rubber layer of a pneumatic tire in which a thermoplastic resin and a rubber are adhered without using an adhesion layer. The laminated body, a laminated substance of a thermoplastic resin film and an unvulcanized rubber composition are integrated at vulcanization of the rubber.

JP 2007 050614 A relates to a laminate used in a pneumatic tire in order to prevent the breakage and failure of a laminate of a thermoplastic elastomer composition/ an adhesive/ a diene rubber composition by the softening of the adhesive. In the laminate, in which the thermoplastic elastomer composition, the adhesive and the diene rubber composition are combined in this order, the difference between peak temperatures of the viscoelastic temperature dispersion before and after the cross-linking of the adhesive is made at least 3° C.

A pneumatic tire using a thermoplastic elastomer comprising a thermoplastic resin matrix for an inner liner layer (air barrier layer), in which a rubber ingredient is dispersed, is described in, for example, JP 8-259741A. However, this inner liner had problems in weathering resistance, damage resistance and fatigue resistance at the time of storage and stocking after tire manufacture or display at shops.

Accordingly, an object of the present invention is to improve the weathering resistance, damage resistance and fatigue resistance of a film liner at the time of storage of a pneumatic tire.

This object is achieved by the features of the claims.

In accordance with the present invention, there is provided a pneumatic tire using, as an inner liner layer, a thermoplastic elastomer comprising a thermoplastic resin matrix in which a rubber component is dispersed wherein the surface of the inner liner layer is covered with a protective layer.

In accordance with the present invention, there is also provided a pneumatic tire wherein the laminate sheet member is a three-layer structure comprising a rubber layer and a protective layer between which an inner liner layer is sandwiched.

In accordance with the present invention, there is further provided a pneumatic tire wherein the laminate sheet member is a four-layer structure containing a bonding layer between the inner liner layer and the rubber layer for bonding the two layer are included.

According to the present invention, by arranging a protective layer on the surface of an inner liner layer of a pneumatic tire using a thermoplastic elastomer, the weathering resistance, damage resistance and fatigue resistance of the film liner at the time of tire storage can be improved. Further, by compounding, to this protective layer, an epoxylated diene-based rubber and a halogenated butyl rubber, the bondability with the film liner layer can be improved. Further, by preparing a sheet member comprising an inner liner layer on which a protective layer and, if necessary, other layers are laminated in advance, member splicing during the tire molding is also improved and the productivity of the tire is improved in comparison with conventional tire manufacture.

### Brief Description of Drawings

FIG. 1 is a view schematically showing a two-layer laminate sheet member forming an inner liner of a pneumatic tire according to the present invention.
FIG. 2 is a view schematically showing a three-layer laminate sheet member forming an inner liner of a pneumatic tire according to the present invention.
FIG. 3 is a view schematically showing a four-layer laminate sheet member forming an inner line of a pneumatic tire according to the present invention.

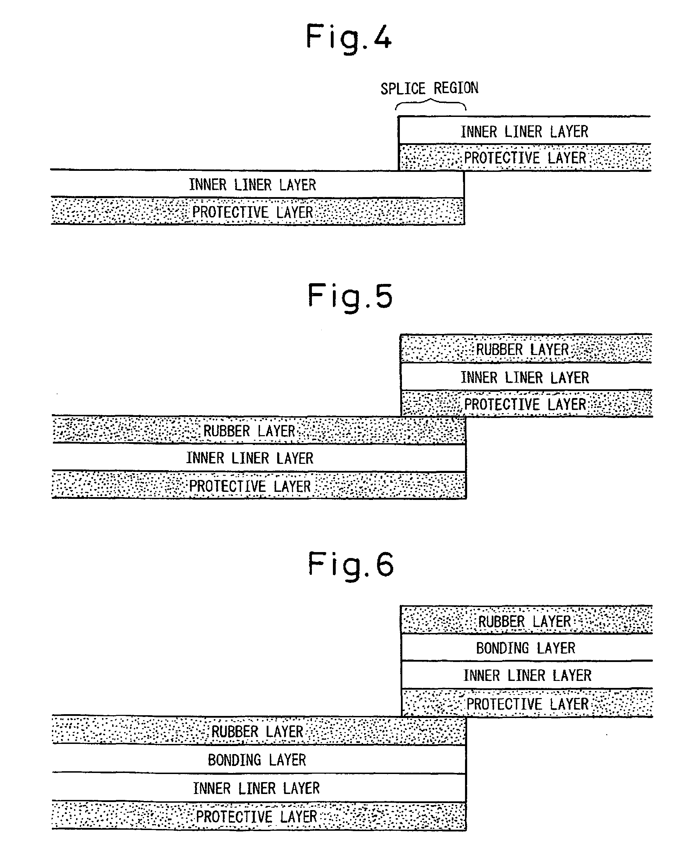

FIG. 4 is a view schematically showing a splice region of a two-layer laminate sheet member forming an inner liner of a pneumatic tire according to the present invention.
FIG. 5 is a view schematically showing a splice region of a three-layer laminate sheet member forming an inner liner of a pneumatic tire according to the present invention.
FIG. 6 is a view schematically showing a splice region of a four-layer laminate sheet member forming an inner liner of a pneumatic tire according to the present invention.

### Best Mode for Carrying Out the Invention

The inventors engaged in research to solve the above problems and, as a result, found that the above object can be achieved by covering the surface of an inner liner layer of a pneumatic tire which uses a thermoplastic elastomer, as an inner liner layer, comprising a thermoplastic resin matrix, in which a rubber component is dispersed.

The use, as an inner liner layer (or air barrier layer) of a pneumatic tire, of a thermoplastic elastomer comprising a thermoplastic resin matrix (e.g., a polyamide resin, polyester resin, polynitrile resin, polymethacrylate resin, polyvinyl resin, cellulose resin, etc.), in which an elastomer ingredient (e.g., diene-based rubber and its hydrogenate, fluorine-based resin, these imide-based resin, olefin-based rubber, halogen-including rubber, silicone rubber, sulfur-including rubber, fluoride rubber and thermoplastic elastomer) is dispersed, is described in, for example, Japanese Unexamined Patent Publication No. 8-259741A etc. Such a thermoplastic elastomer can be produced by adding a vulcanizer, for example, before melt kneading a thermoplastic resin and elastomer component by a twin screw kneader-extruder or the like, or while kneading the same, to effect dynamically vulcanization. Note that, for details, Japanese Unexamined Patent Publication No. 8-259741A should be referred to (Note: the contents of this publication are incorporated in this Description by reference).

In the present invention, the protective layer used mainly includes, as a rubber component, a natural rubber (NR), styrene-butadiene copolymer rubber (SBR), or other diene-based rubbers or an epoxylated natural rubber or other diene-based rubber derivatives and can include, as other components, carbon black, silica, or other fillers, vulcanization-based compounding agent, process oil, anti-aging agent, tackifier, or other various additives generally used in tire rubber compositions in a general amount not impairing the object of the present invention. The protective layer according to the present invention preferably includes natural rubber in 20 to 90 parts by weight, more preferably 50 to 60 parts by weight, based upon 100 parts by weight of the rubber ingredient, from the viewpoint of tackiness with the thermoplastic elastomer layer and kneading processability.

The protective layer contains epoxylated natural rubber, preferably, from the viewpoint of imparting adhesiveness, in an epoxylated rate (i.e., mole fraction of epoxylated isoprene units) of 25 to 65%, more preferably 55 to 65%. Note that, the protective layer has a content of epoxylated natural rubber of, preferably 10 to 70 parts by weight, more preferably 40 to 50 parts by weight, based upon 100 parts by weight of the rubber component, from the viewpoint of bondability. Note that, the epoxylated natural rubber can be produced by adding, to a known rubber, for example, a natural rubber latex, peracetic acid and reacting these while stirring. It is also commercially available from Muang Mai Gutherie Public Company as ENR-25 (epoxylated rate 25 mol%), ENR-50 (epoxylated rate 50 mol%), etc.

The protective layer can contain a tackifier and a rosin oil. It may include, as the tackifier, a condensate of tert-butyl phenol and acetylene, a phenol resin or the like. Inclusion of the condensate of tert-butyl phenol and acetylene or other tackifier in 3 to 15 parts by weight based upon 100 parts by weight of the rubber ingredient is preferable from the viewpoint of imparting tackiness. On the other hand, as the rosin oil, a mixture of tall oil rosin (e.g., abietic acid and isomer of the same) and an aliphatic acid (e.g., oleic acid, linoleic acid, stearic acid, palmitic acid, and the like) etc. can be mentioned. From the viewpoint of imparting tackiness, 3 to 15 parts by weight are preferably compounded to 100 parts by weight of the rubber ingredient.

The protective layer used in the present invention, from the viewpoint of bondability, preferably includes a halogenated butyl rubber, for example, brominated isoprene-isobutylene copolymer, brominated paramethylstyrene-isobutylene copolymer, etc. in 30 to 100 parts by weight, more preferably 30 to 50 parts by weight, based upon 100 parts by weight of the starting rubber. Note that, these halogenated butyl rubbers are known. They are also commercially available from Exxon Mobil Chemical as Bromobutyl 2255, Exxpro MDX 90-10, etc.

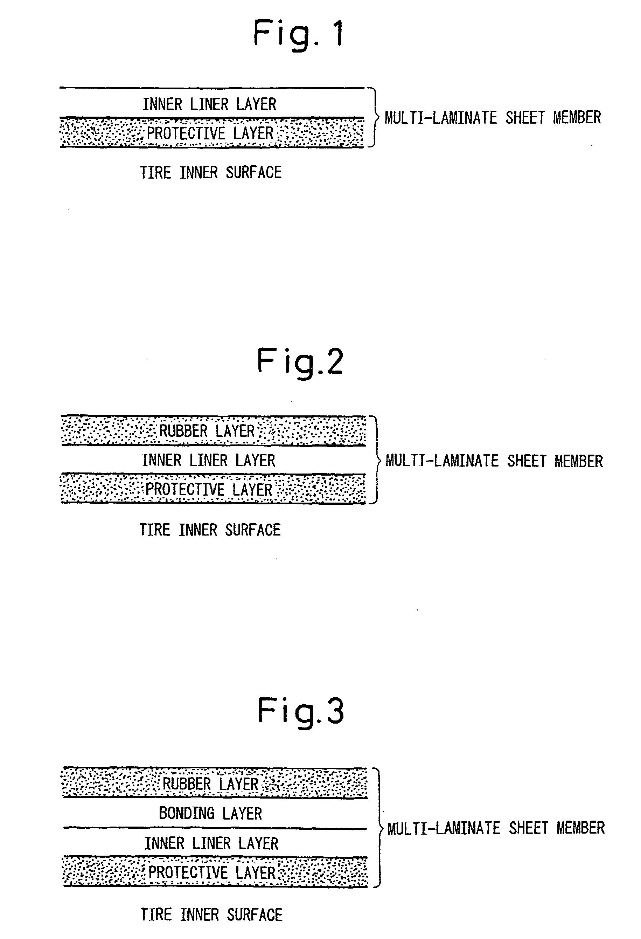

The pneumatic tire according to the present invention can be produced using a method of preparing, at the molding stage of the pneumatic tire manufacturing, for example, a two-layer structure of an inner liner layer and a protective layer (see FIG. 1), a three-layer structure of a rubber layer and a protective layer between which an inner liner layer is sandwiched (see FIG. 2), or other a laminate sheet member that contains an inner liner layer and a protective layer, wrapping this around a molding drum, and splicing it. Due to this, the member splice ability at the time of molding is also improved and the productivity is improved more than until now.

The compositions of the protective layer and the rubber layer of the laminate sheet member used in the present invention may be the same or different. The laminate sheet member can be made a four-layer structure comprised of the inner liner layer and the rubber layer, between which bonding layers for bonding the two are provided (see FIG. 3). Further, it is possible to add a colorant to give a different color to a part or all of the protective layer and the rubber layer laminated on the opposite side of the inner liner layer so as to make the top and bottom sides of the laminate sheet member easily identifiable and to apply a surface relief pattern to a part or all of at least one surface of the protective layer or the rubber layer laminated on the opposite side of the inner liner layer so as to make the top and bottom sides of the laminate sheet member easily identifiable, whereby human error during tire manufacturing is suppressed.

There is also a method of coating a release agent to prevent adhesion of the protective layer and the vulcanization bladder when vulcanizing a tire provided with a protective layer on the inside surface of the inner liner layer, however, by applying a sheet obtained by coextruding the three layers of an inner liner layer, protective layer and release layer to a green tire, a release effect can be obtained without having to coat a release agent and productivity can be improved. Further, when tires are sold, tires will often be displayed at the shop outdoors. There was the problem that sunlight caused the inner surface layer to deteriorate. However, due to the presence of the release layer, it becomes possible to protect the inner surface until rim attachment. The material forming the release layer is preferably a material enabling the release layer to be peeled after vulcanization at time of use of the tire as a product. Specifically, at least one material selected from a methyl-pentene copolymer, polyethylene, polypropylene, polyethylene terephthalate, polybutylene terephthalate, polyethylene naphthalate, polybutylene naphthalate, nylon 6, nylon 66 or a nylon 6/66 copolymer may be used.

The rubber component usable in the present invention may suitably contain, in addition to the above components, carbon black or silica or another filler, a vulcanization or cross-linking agent, a vulcanization or cross-linking accelerator, various types of oils, an antioxidant, a plasticizer, or other additives generally used for a tire or for another rubber composition. These additives may be mixed by a general method to obtain a composition for vulcanization or cross-linking. The amounts of these additives may be made conventional general amounts so long as not adversely affecting the object of the present invention.

### Examples

Examples will now be used to further explain the present invention, but the scope of the present invention is by no means limited to these Examples.

### Preparation of Formulations 1 to 28

In each of the formulations shown in Table I, the ingredients other than the vulcanization accelerator and sulfur were kneaded in a 1.6 liter internal mixer for 4 minutes and discharged when reaching 150°C to obtain a master batch. The vulcanization accelerator and the sulfur were kneaded into this master batch by an open roll to obtain rubber compositions of formulations 1 to 28. The rubber composition was used to run a bonding test by the test method shown below. The results are shown in Table I.

### Bonding Test (Bonding With Thermoplastic Elastomer)

A thermoplastic elastomer film (thickness 200 µm) was bonded to an unvulcanized rubber sheet (thickness 2 mm) of each of the formulations of Table I, vulcanized at 160°C x 20 minutes, then cut into a strip having a width of 25 mm and a length of 100 mm. A cut was made along the width direction in the center part of the thermoplastic elastomer film of this test piece. This was repeatedly subjected by a De Mattia crack tester made by Ueshima Seisakusho to successive tensile strain of a stroke of 10 mm with a chuck distance of 60 mm for 500,000 times, then peeling of the film from the cut was visually observed and judged as follows. The results are shown in Table I.
A: No film peeling in the perpendicular direction from the cut was visually observed.
B: Length of film peeling in the perpendicular direction from the cut was 2 mm or less.
C: Length of film peeling in the perpendicular direction from the cut was over 2 mm.

**Table I Protective Layer Formulation and Bondability With Film Liner**

| | | | 1 | 2 | 3 | 4 | 5 | 6 | 7 |
|---|---|---|---|---|---|---|---|---|---|
| ENR-65 | Epoxylated natural rubber (epoxylated rate 65%) | Muang Mai Gutherie Public Company | - | - | 40 | - | - | - | - |
| ENR-60 | Epoxylated natural rubber (epoxylated rate 60%) | Muang Mai Gutherie Public Company | - | - | - | 40 | - | - | - |
| ENR-55 | Epoxylated natural rubber (epoxylated rate 55%) | Muang Mai Gutherie Public Company | - | - | - | - | 40 | - | - |
| ENR-50 | Epoxylated natural rubber (epoxylated rate 50%) | Muang Mai Gutherie Public Company | - | - | - | - | - | 40 | - |
| ENR-25 | Epoxylated natural rubber (epoxylated rate 25%) | Muang Mai Gutherie Public Company | - | - | - | - | - | - | 40 |
| Natural rubber SIR20 | Natural rubber | | - | 100 | 60 | 60 | 60 | 60 | 60 |
| Nipol 1502 | SBR1502 | Nippon Zeon | 100 | - | - | - | - | - | - |
| EXXPRO MDX90-10 | Br-IPMS | Exxon Mobile Chemical | - | - | - | - | - | - | |
| BROMOBUTYL 2255 | Br-IIR | Exxon Mobile Chemical | - | - | - | - | - | - | - |
| Diablack G | Carbon black | Mitsubishi Chemical | 50 | 50 | 50 | 50 | 50 | 50 | 50 |
| SUPREX CLAY | Kaolin clay | Kentucky-Tennessee Clay Company | -- | - | - | - | - | - | - |
| Ultramarine NO.300 | Blue powder | Daiichi Kasei Kogyo | - | - | - | - | - | - | - |
| Zinc oxide | | Seido Chemical Industry | 3.0 | 3.0 | 3.0 | 3.0 | 3.0 | 3.0 | 3.0 |
| Stearic acid | | Industrial Stearic Acid | 1.0 | 1.0 | 1.0 | 1.0 | 1.0 | 1.0 | 1.0 |
| Koresin | Condensate of tert-butyl Phenol and acetylene | BASF | 8.0 | 8.0 | 8.0 | 8.0 | 8.0 | 8.0 | 8.0 |
| MR1085A | Compound of rosin acid and rosin acid ester | Exxon Mobile | 6.0 | 6.0 | 6.0 | 6.0 | 6.0 | 6.0 | 6.0 |
| Gold Flower band sulfur fine powder 150 mesh | Sulfur | Tsurumi Chemical | 2.5 | 2.5 | 2.5 | 2.5 | 2.5 | 2.5 | 2.5 |
| Noccelar CZ-G | Vulcanisation accelerator | Ouchi Shinko Chemical Industry | 1.0 | 1.0 | 1.0 | 1.0 | 1.0 | 1.0 | 1.0 |
| (Total) | | | 171.5 | 171.50 | 131.5 | 171.5 | 171.5 | 171.5 | 171.5 |
| Bondability with film liner | | | C | C | A | A | A | B | B |

| | | | 8 | 9 | 10 | 11 | 12 | 13 | 14 |
|---|---|---|---|---|---|---|---|---|---|
| ENR-65 | Epoxylated natural rubber (epoxylated rate 65%) | Muang Mai Gutherie Public Company | - | - | - | - | - | - | - |
| ENR-60 | Epoxylated natural rubber (epoxylated rate 60%) | Muang Mai Gutherie Public Company | 10 | 40 | 50 | 70 | 40 | 40 | 40 |
| ENR-55 | Epoxylated natural rubber (epoxylated rate 55%) | Muang Mai Gutherie Public Company | - | - | - | - | - | - | - |
| ENR-50 | Epoxylated natural rubber (epoxylated rate 50%) | Muang Mai Gutherie Public Company | - | - | - | - | - | - | - |
| ENR-25 | Epoxylated natural rubber (epoxylated rate 25%) | Muang Mai Gutherie Public Company | - | - | - | - | - | - | - |
| Natural rubber SIR20 | Natural rubber | | 90 | 20 | 50 | 30 | 60 | 60 | 60 |
| Nipol 1502 | SBR1502 | Nippon Zeon | - | 40 | - | - | - | - | - |
| EXXPRO MDX90-10 | Br-IPMS | Exxon Mobile Chemical | - | - | - | - | - | - | - |
| BROMOBUTYL 2255 | Br-IIR | Exxon Mobile Chemical | - | - | - | - | - | - | - |
| DiablackG | Carbon black | Mitsubishi Chemical | 50 | 50 | 50 | 50 | 50 | 50 | 50 |
| SUPREX CLAY Ultramarine NO.300 | Kaolin clay Blue powder | Kentucky-Tennessee Clay Company Daiichi Kasei Kogyo | - | - | - | - | - | - | - |
| Zinc oxide | | Seido Chemical Industry | 3.0 | 3.0 | 3.0 | 3.0 | 3.0 | 3.0 | 3.0 |
| Stearic acid | | Industrial Stearic Acid | 1.0 | 1.0 | 1.0 | 1.0 | 1.0 | 1.0 | 1.0 |
| Koresin | Condensate of tert-butyl phenol and acetylene | BASF | 8.0 | 8.0 | 8.0 | 8.0 | 2.0 | 3.0 | 15.0 |
| MR1085A | Compound of rosin acid and rosin acid ester | Exxon Mobile | 6.0 | 6.0 | 6.0 | 6.0 | 2.0 | 6.0 | 6.0 |
| Gold Flower band sulfur fine powder 150mesh | Sulfur | Tsurumi Chemical | 2.5 | 2.5 | 2.5 | 2.5 | 2.5 | 2.5 | 2.5 |
| Noccelar CZ-G | Vulcanization accelerator | Ouchi Shinko Chemical Industry | 1.0 | 1.0 | 1.0 | 1.0 | 1.0 | 1.0 | 1.0 |
| (Total) | | | 171.5 | 171.5 | 171.5 | 171.5 | 161.5 | 166.5 | 178.5 |
| Bondability with film liner | | | B | A | A | A | A | A | A |

| | | | 15 | 16 | 17 | 18 | 19 | 20 | 21 |
|---|---|---|---|---|---|---|---|---|---|
| ENR-65 | Epoxylated natural rubber (epoxylated rate 65%) | Muang Mai Gutherie Public Company | - | - | - | - | - | - | - |
| ENR-60 | Epoxylated natural rubber (epoxylated rate 60%) | Muang Mai Gutherie Public Company | 40 | 40 | 40 | - | - | - | - |
| ENR-55 | Epoxylated natural rubber (epoxylated rate 55%) | Muang Mai Gutherie Public Company | - | - | - | - | - | - | - |
| ENR-50 | Epoxylated natural rubber (epoxylated rate 50%) | Muang Mai Gutherie Public Company | - | - | - | - | - | - | - |
| ENR-25 | Epoxylated natural rubber (epoxylated rate 25%) | Muang Mai Gutherie Public Company | - | - | - | - | - | - | - |
| Natural rubber SIR20 | Natural rubber | | 60 | 60 | 60 | 70 | 70 | 70 | 30 |
| Nipol 1502 | SBR1502 | Nippon Zeon | - | - | - | - | - | - | 30 |
| EXXPRO MDX90-10 | Br-IPMS | Exxon Mobile Chemical | - | - | - | 30 | 10 | - | 30 |
| BROMOBUTYL 2255 | Br-IIR | Exxon Mobile Chemical | - | - | - | - | 20 | 30 | 10 |
| Diablack G | Carbon black | Mitsubishi Chemical | 50 | 50 | 50 | 50 | 50 | 50 | 50 |
| SUPREX CLAY | Kaolin clay | Kentucky-Tennessee Clay Company | - | - | - | - | - | - | - |
| Ultramarine NO.300 | Blue powder | Daiichi Kasei Kogyo | - | - | - | - | - | - | - |
| Zinc oxide | | Seido Chemical Industry | 3.0 | 3.0 | 3.0 | 3.0 | 3.0 | 3.0 | 3.0 |
| Stearic acid | | Industrial Stearic Acid | 1.0 | 1.0 | 1.0 | 1.0 | 1.0 | 1.0 | 1.0 |
| Koresin | Condensate of tert-butyl phenol and acetylene | BASF | 8.0 | 8.0 | 20.0 | - | - | - | - |
| MR1085A | Compound of rosin acid and rosin acid ester | Exxon Mobile | 3.0 | 15.0 | 20.0 | - | - | - | - |
| Gold Flower band sulfur fine powder 150 mesh | Sulfur | Tsurumi Chemical | 2.5 | 2.5 | 2.5 | 1.5 | 1.5 | 1.5 | 1.5 |
| Noccelar CZ-G | Vulcanization accelerator | Ouchi Shinko Chemical Industry | 1.0 | 1.0 | 1.0 | 1.0 | 1.0 | 1.0 | 1.0 |
| (Total) | | | 168.5 | 180.5 | 197.5 | 156.5 | 156.5 | 156.5 | 156.5 |
| Bondability with film liner | | | A | A | A | B | B | B | A |

| | | | 22 | 23 | 24 | 25 | 26 | 27 | 28 |
|---|---|---|---|---|---|---|---|---|---|
| ENR-65 | Epoxylated natural rubber (epoxylated rate 65%) | Muang Mai Gutherie Public Company | - | - | - | - | - | - | - |
| ENR-60 | Epoxylated natural rubber (epoxylated rate 60%) | Muang Mai Gutherie Public Company | - | - | - | - | - | - | - |
| ENR-55 | Epoxylated natural rubber (epoxylated rate 55%) | Muang Mai Gutherie Public Company | - | - | - | - | - | - | - |
| ENR-50 | Epoxylated natural rubber (epoxylated rate 50%) | Muang Mai Gutherie Public Company | - | - | - | - | - | - | - |
| ENR-25 | Epoxylated natural rubber (epoxylated rate 25%) | Muang Mai Gutherie Public Company | - | - | - | - | - | - | - |
| Natural rubber SIR20 | Natural rubber | | 60 | - | 50 | - | - | - | 60 |
| Nipol 1502 | SBR1502 | Nippon Zeon | - | 60 | - | - | - | - | - |
| EXXPRO MDX90-10 | Br-IPMS | Exxon Mobile Chemical | 30 | 30 | 30 | 100 | 50 | - | 30 |
| BROMOBUTYL 2255 | Br-IIR | Exxon Mobile Chemical | 10 | 10 | 20 | - | 50 | 100 | 10 |
| Diablack G | Carbon black | Mitsubishi Chemical | 50 | 50 | 50 | 50 | 50 | 50 | - |
| SUPREX CLAY | Kaolin clay | Kentucky-Tennessee Clay Company | - | - | - | - | - | - | 45 |
| Ultramarine NO.300 | Blue powder | Daiichi Kasei Kogyo | - | - | - | - | - | - | 5.0 |
| Zinc oxide | | Seido Chemical Industry | 3.0 | 3.0 | 3.0 | 3.0 | 3.0 | 3.0 | 3.0 |
| Stearic acid | | Industrial Stearic Acid | 1.0 | 1.0 | 1.0 | 1.0 | 1.0 | 1.0 | 1.0 |
| Koresin | Condensate of tert-butyl phenol and acetylene | BASF | - | - | - | - | - | - | - |
| MR1085A | Compound of rosin acid and rosin acid ester | Exxon Mobile | - | - | - | - | - | - | - |
| Gold Flower band sulfur fine powder 150 mesh | Sulfur | Tsurumi Chemical | 1.5 | 1.5 | 1.5 | 1.5 | 1.5 | 1.5 | 1.5 |
| Noccelar CZ-G | Vulcanization accelerator | Ouchi Shinko Chemical Industry | 1.0 | 1.0 | 1.0 | 1.0 | 1.0 | 1.0 | 1.0 |
| (Total) | | | 156.5 | 156.5 | 156.5 | 156.5 | 156.5 | 156.5 | 156.5 |
| Bondability with film | liner | | A | A | A | A | A | A | A |

| | | | | | | | | | |
|---|---|---|---|---|---|---|---|---|---|
| Footnotes of Table I *1: ENR-60 made by RRIM *2: Natural rubber *3: Nipol 1502 made by Nippon Zeon *4: EXXPRO MDX90-10 made by Exxon Mobile Chemical *5: BROMOBUTYL 2255 made by Exxon Mobile Chemical *6: Diablack G made by Mitsubishi Chemical *7: SUPREX CLAY made by Kentucky-Tennessee Clay *8: Ultramarine NO, 300 made by Daiichi Kasei Kogyo *9: Zinc Oxide made by Seido Chemical Industry *10: Beads Stearic Acid made by NOF Corporation *11: Koresin made by BASF *12: MR1085A made by Mobile Rosin Oil Company *13: Gold Flower band sulfur fine powder (150 mesh) made by Tsurumi Chemical *14: Noccelar CZ-G made by Ouchi Shinko Chemical Industry | | | | | | | | | |

### Examples 1 to 8 and Comparative Example 1.

### Preparation of Thermoplastic Elastomer Film

A film liner was prepared with each of the formulations shown in the following Table II in the following way. That is, a resin, rubber material and cross-linking-based compounding agents necessary for dynamic cross-linking were mixed by a twin-screw kneading extruder to obtain a thermoplastic resin forming a continuous phase in a state, in which rubber is finely dispersed. This was extruded in strands from the discharge outlets of the extruder and the strands obtained were cut by a cutter to form pellets. The pellets were extruded by a T-die into a sheet. Further, a two-layer extruding T-die was used to also prepare a two-layer film with the bonding layer of the formulation of Table III.

**Table II Film Liner and Bonding Layer Formulations**

| Film liner formulation (parts by weight) | | | |
|---|---|---|---|
| CM6001 | Nylon 6/66 | Toray | 40 |
| EXXPRO MDX90-10 | Br-IPMS | Exxon Mobile Chemical | 60 |
| Zinc Oxide | | Seido Chemical Industry | 1 |
| Stearic acid | | NOF Corporation | 1 |

| Formulation of bonding layer (parts by weight) | | | |
|---|---|---|---|
| Epofriend AT501 | Epoxylated SBS | Daicel Chemical Industries | 100 |
| YS Resin D105 | Terpene resin | Yasuhara Chemical | 60 |
| Noctizer TOT-N | Vulcanization accelerator | Ouchi Shinko Chemical Industry | 3 |

### Pneumatic Tire Durability Test

Each of the above liner films (100 µm) was used in the preparation of a pneumatic tire (195/65R15 tire) provided with an inner liner of the configuration shown in Table III. The following method was used to evaluate the state before and after deterioration (six months exposure outdoors). That is, after a drum durability test at -20°C, an air pressure of 1.2 kgf/cm² and a load of 5 KN, the protective layer was peeled off, while coating a solvent (toluene) and the presence of cracks was checked for by the following criteria. The results are shown in Table III.

### Judgment Criteria

A: Cracks all less than 5 mm
B: 10 or less cracks of 5 mm to 10 mm
C: 11 or more cracks of 5 mm to 10 mm or cracks of a length over 10 mm

**Table III: Low Temperature Durability Test Results of Tire Before and After Deterioration**

| Example/ Comparative example | Structure | Protective layer | Rubber layer | Evaluation | |
|---|---|---|---|---|---|
| | | | | Before exposure | After exposure |
| Comparative Example 1 | 1 layer (only liner film) | - | - | B | C |
| Example 1 | 2 layers (liner film and protective layer) | Table 1 No. 2 formulation, 100 µm | - | A | A |
| Example 2 | 2 layers (liner film and protective layer) | Table 1 No. 2 formulation, 50 µm | - | A | A |
| Example 3 | 2 layers (liner film and protective layer) | Table 1 No. 1 formulation, 100 µm | - | A | A |
| Example 4 | 2 layers (liner film and protective layer) | Table 1 No. 4 formulation, 100 µm | - | A | A |
| Example 5 | 2 layers (liner film and protective layer) | Table 1 No. 22 formulation, 100 µm | - | A | A |
| Example 6 | 2 layers (liner film and protective layer) | Table 1 No. 28 formulation, 100 µm | - | A | A |
| Example 7 | 3 layers (sandwiched rubber) | Table 1 No. 22 formulation, 100 µm | Table 1 No. 4 formulation, 100 µm | A | A |
| Example 8 | 4 layers (with sandwiched rubber and bonding layer) | Table 1 No. 22 formulation, 100 µm | Table 1 No. 2 formulation, 100 µm | A | A |

### Examples 9 to 42 and Comparative Example 2

### Splicing Evaluation Test

A spare laminate liner member of each of the structures shown in Table IV was wrapped around a tire manufacturing molding drum, spliced to have a 10 mm circumferential length and sufficiently press bonded with a stitcher. The following criteria was used for judging the splicing. The results are shown in Table IV.

A: No peeling in the splice even if the spliced portion is left for 10 minutes on the top side of the drum.

C: Peeling in the splice in less than 10 minutes of the spliced portion being left on the top side of the drum.

### Splice Retention Evaluation Test

Two spare laminate liner members of each of the structures shown in Table IV and cut to a width of 50 mm and a length of 100 mm were spliced together so that different surfaces of the members overlapped for a 10 mm length, were sufficiently press bonded with a stitcher, then were clamped to a stretcher with a 160 mm length so that the spliced portion was at the center. For one minute, the total distance between the clamps was extended up to 240 mm (50% stretch) and the following criteria were used for evaluation. The results are shown in Table IV.
A: No peeling can be visually seen in the spliced portion during 10 minutes detention.
B: Peeling in the spliced portion can be visually seen during 10 minutes detention however, parts of the two spare laminate liner members are still attached.
C: The spliced portion is completely peeled apart during 10 minutes detention, and the two spare laminate liner materials are completely split.

**Table IV: Molding Property (Splice of Members, Splice Retention When molding), (15 Inch Tire Mould, Film Liner 100 µm Thickness, 10 mm splice Length)**

| Example/ Comparative example | Structure | Protective layer | Rubber layer | Splicing | Splice retention |
|---|---|---|---|---|---|
| Comparative Example 2 | 1 layer (only liner film) | | - | C | C (Not measurable) |
| Example 9 | 2 layers (liner film and protective layer) | Table 1 No. 2 formulation, 100 µm | - | A | B |
| Example 10 | 2 layers (liner film and protective layer) | Table 1 No. 4 formulation, 100 µm | - | A | A |
| Example 11 | 2 layers (liner film and protective layer) | Table 1 No. 22 formulation, 100 µm | - | A | A |
| Example 12 | 3 layers (sandwich) | Table 1 No. 2 formulation, 100 µm | Table 1 No. 2 formulation, 100 µm | A | B |
| Example 13 | 3 layers (sandwich) | Table 1 No. 3 formulation, 100 µm | Table 1 No. 3 formulation, 100 µm | A | A |
| Example 14 | 3 layers (sandwich) | Table 1 No. 4 formulation, 100 µm | Table 1 No. 4 formulation, 100 µm | A | A |
| Example 15 | 3 layers (sandwich) | Table 1 No. 5 formulation, 100 µm | Table 1 No. 5 formulation, 100 µm | A | A |
| Example 16 | 3 layers (sandwich) | Table 1 No. 6 formulation, 100 µm | Table 1 No. 6 formulation, 100 µm | A | A |
| Example 17 | 3 layers (sandwich) | Table 1 No. 7 formulation, 100 µm | Table 1 No. 7 formulation, 100 µm | A | A |
| Example 18 | 3 layers (sandwich) | Table 1 No. 8 formulation, 100 µm | Table 1 No. 8 formulation, 100 µm | A | A |
| Example 19 | 3 layers (sandwich) | Table 1 No. 9 formulation, 100 µm | Table 1 No. 9 formulation, 100 µm | A | A |
| Example 20 | 3 layers (sandwich) | Table 1 No. 10 formulation, 100 µm | Table 1 No. 10 formulation, 100 µm | A | A |
| Example 21 | 3 layers (sandwich) | Table 1 No. 11 formulation, 100 µm | Table 1 No. 11 formulation, 100 µm | A | A |
| Example 22 | 3 layers (sandwich) | Table 1 No. 12 formulation, 100 µm | Table 1 No. 12 formulation, 100 µm | A | A |
| Example 23 | 3 layers (sandwich) | Table 1 No. 13 formulation, 100 µm | Table 1 No. 13 formulation, 100 µm | A | A |
| Example 24 | 3 layers (sandwich) | Table 1 No. 14 formulation, 100 µm | Table 1 No. 14 formulation, 100 µm | A | A |
| Example 25 | 3 layers (sandwich) | Table 1 No. 15 formulation, 100 µm | Table 1 No. 15 formulation, 100 µm | A | A |
| Example 26 | 3 layers (sandwich) | Table 1 No. 16 formulation, 100 µm | Table 1 No. 16 formulation, 100 µm | A | A |
| Example 27 | 3 layers (sandwich) | Table 1 No. 17 formulation, 100 µm | Table 1 No. 17 formulation, 100 µm | A | A |
| Example 28 | 3 layers (sandwich) | Table 1 No. 18 formulation, 100 µm | Table 1 No. 18 formulation, 100 µm | A | A |
| Example 29 | 3 layers (sandwich) | Table 1 No. 19 formulation, 100 µm | Table 1 No. 19 formulation, 100 µm | A | A |
| Example 30 | 3 layers (sandwich) | Table 1 No. 20 formulation, 100 µm | Table 1 No. 20 formulation, 100 µm | A | A |
| Example 31 | 3 layers (sandwich) | Table 1. No. 21 formulation, 1.00 µm | Table 1 No. 21 formulation, 100 µm | A | A |
| Example 32 | 3 layers (sandwich) | Table 1 No. 22 formulation, 100 µm | Table 1 No. 22 formulation, 100 µm | A | A |
| Example 33 | 3 layers (sandwich) | Table 1 No. 23 formulation, 100 µm | Table 1 No. 23 formulation, 100 µm | A | A |
| Example 34 | 3 layers (sandwich) | Table 1 No. 24 formulation, 100 µm | Table 1 No. 24 formulation, 100 µm | A | A |
| Example 35 | 3 layers (sandwich) | Table 1 No. 25 formulation, 100 µm | Table 1 No. 25 formulation, 100 µm | A | A |
| Example 36 | 3 layers (sandwich) | Table 1 No. 26 formulation, 100 µm | Table 1 No. 26 formulation, 100 µm | A | A |
| Example 37 | 3 layers (sandwich) | Table 1 No. 27 formulation, 100 µm | Table 1 No. 27 formulation, 100 µm | A | A |
| Example 38 | 3 layers (sandwich) | Table 1 No. 28 formulation, 100 µm | Table 1 No. 28 formulation, 100 µm | A | A |
| Example 39 | 4 layers (with sandwiched rubber and bonding layer) | Table 1 No. 4 formulation, 100 µm | Table 1 No. 1 formulation, 100 µm | A | A |
| Example 40 | 4 layers (with sandwiched rubber and bonding layer) | Table 1 No. 4 formulation, 100 µm | Table 1 No. 2 formulation, 100 µm | A | A |
| Example 41 | 4 layers (with sandwiched rubber and bonding layer) | Table 1 No. 22 formulation, 100 µm | Table 1 No. 1 formulation, 100 µm | A | A |
| Example 42 | 4 layers (with sandwiched rubber and bonding layer) | Table 1 No. 22 formulation, 100 µm | Table 1 No. 2 formulation, 100 µm | A | A |

### Industrial Applicability

According to the present invention, by providing a protective layer on the surface of the inner liner layer, the weathering resistance, damage resistance and fatigue resistance of the film liner during storage of a pneumatic tire can be improved. By compounding an epoxylated diene-based rubber or halogenated butyl rubber in the protective layer, the bondability with the film liner layer can be improved. Further, by preparing a sheet member laminated in advance, splicing of members during molding is improved and productivity in pneumatic tire manufacture is improved in comparison to conventional methods.

## Claims

1. A pneumatic tire using a thermoplastic elastomer for an inner liner layer comprising a thermoplastic resin matrix in which a rubber component is dispersed, wherein a surface of said inner liner layer is covered with a protective layer.
wherein the protective layer comprises an epoxylated natural rubber which is located at the inner surface of the tire.

2. A pneumatic tire as claimed in claim 1, wherein the epoxylated rate of the epoxylated natural rubber is 25 to 65%.

3. A pneumatic tire as claimed in claim 1 or 2, wherein the content of the epoxylated natural rubber of the protective layer is 10 to 70 parts by weight based upon 100 parts by weight of the rubber component.

4. A pneumatic tire as claimed in any one of claims 1 to 3, wherein a natural rubber content of the protective layer is 20 to 90 parts by weight based upon 100 parts by weight of the rubber ingredient.

5. A pneumatic tire as claimed in any one of claims 1 to 4, wherein the protective layer contains a tackifier and a rosin oil.

6. A pneumatic tire as claimed in claim 5, wherein the tackifier of the protective layer contains at least a condensate of tert-butyl phenol and acetylene.

7. A pneumatic tire as claimed in claim 6, wherein the protective layer contains 3 to 15 parts by weight of the condensate of tert-butyl phenol and acetylene based upon 100 parts by weight of the rubber component.

8. A pneumatic tire as claimed in any one of claims 5 to 7, wherein the rosin oil content of protective layer is 3 to 15 parts by weight based upon 100 parts by weight of the rubber component.

9. A pneumatic tire as claimed in claim 1, wherein the protective layer contains at least one halogenated butyl rubber.

10. A pneumatic tire as claimed in claim 9, wherein the halogenated butyl rubber is a brominated isoprene-isobutylene copolymer.

11. A pneumatic tire as claimed in claim 9, wherein the halogenated butyl rubber is a brominated paramethylstyrene-isobutylene copolymer.

12. A pneumatic tire as claimed in any one of claims 9 to 11, wherein the total content of halogenated butyl rubber of the protective layer is 30 to 100 parts by weight based upon 100 parts by weight of the rubber ingredient.

13. A pneumatic tire as claimed in any one of claims 1 to 12, wherein the inner surface of the protective layer is further covered with a release layer.

14. A pneumatic tire as claimed in claim 13, wherein the release layer is at least one material selected from methylpentene copolymer, polyethylene, polypropylene, polyethylene terephthalate, polybutylene terephthalate, polyethylene naphthalate, polybutylene naphthalate, nylon 6, nylon 66 and nylon 6/66 copolymer.

15. A pneumatic tire as claimed in any one of claims 1 to 14 manufactured using a method of preparing, at a molding stage of the pneumatic tire, a laminate sheet member containing (i) an inner liner layer, (ii) a protective layer and, optionally (iii) a release layer, then wrapping the resultant sheet member around a molding drum and splicing the same.

16. A pneumatic tire as claimed in claim 15, wherein the laminate sheet member is a two-layer structure of an inner liner layer and protective layer.

17. A pneumatic tire as claimed in claim 15, wherein the laminate sheet member is a three-layer structure in which an inner liner layer is sandwiched between a rubber layer and a protective layer.

18. A pneumatic tire as claimed in claim 17, wherein the composition of the protective layer of the laminate sheet member differs from that of the rubber layer.

19. A pneumatic tire as claimed in claim 17 or 18, wherein the laminate sheet member is a four-layer structure containing a bonding layer for bonding the inner liner layer and the rubber layer therebetween.

20. A pneumatic tire as claimed in any one of claims 17 to 19, wherein a part or all of the protective layer and the rubber layer laminated on the opposite side of the inner liner layer are colored differently from each other to thereby make the top and bottom sides of the laminate sheet member easily identifiable.

21. A pneumatic tire as claimed in any one of claims 17 to 20, wherein a surface relief pattern is applied to at least one surface of a part or all of the protective layer or the rubber layer laminated on the opposite side of the inner liner layer to thereby make the top and bottom sides of the laminate sheet member easily identifiable.

## Patentansprüche

1. Luftreifen unter Verwendung eines thermoplastischen Elastomers für eine Innenseelenschicht mit einer thermoplastischen Harzmatrix, in der eine Gummikomponente dispergiert ist, wobei eine Oberfläche der Innenseelenschicht mit einer Schutzschicht abgedeckt ist,
wobei die Schutzschicht einen epoxylierten Naturgummi aufweist, der an der Innenfläche des Reifens liegt.

2. Lufttreifen nach Anspruch 1, wobei die epoxylierte Rate des epoxylierten Naturgummis 25 bis 65 % beträgt.

3. Lufttreifen nach Anspruch 1 oder 2, wobei der Gehalt des epoxylierten Naturgummis der Schutzschicht 10 bis 70 Gewichtsteile auf der Grundlage von 100 Gewichtsteilen der Gummikomponente beträgt.

4. Luftreifen nach einem der Ansprüche 1 bis 3, wobei ein Naturgummigehalt der Schutzschicht 20 bis 90 Gewichtsteile auf der Grundlage von 100 Gewichtsteilen des Gummibestandteils beträgt.

5. Luftreifen nach einem der Ansprüche 1 bis 4, wobei die Schutzschicht einen Klebrigmacher und ein Harzöl enthält.

6. Luftreifen nach Anspruch 5, wobei der Klebrigmacher der Schutzschicht mindestens ein Kondensat von tert-Butylphenol und Acetylen enthält.

7. Luftreifen nach Anspruch 6, wobei die Schutzschicht 3 bis 15 Gewichtsteile des Kondensats von tert-Butylphenol und Acetylen auf der Grundlage von 100 Gewichtsteilen der Gummikomponente enthält.

8. Luftreifen nach einem der Ansprüche 5 bis 7, wobei der Harzölgehalt der Schutzschicht 3 bis 15 Gewichtsteile auf der Grundlage von 100 Gewichtsteilen der Gummikomponente beträgt.

9. Luftreifen nach Anspruch 1, wobei die Schutzschicht mindestens einen halogenierten Butylgummi enthält.

10. Luftreifen nach Anspruch 9, wobei der halogenierte Butylgummi ein bromiertes Isopren-Isobutylen-Copolymer ist.

11. Luftreifen nach Anspruch 9, wobei der halogenierte Butylgummi ein bromiertes Paramethylstyrol-Isobutylen-Copolymer ist.

12. Luftreifen nach einem der Ansprüche 9 bis 11, wobei der Gesamtgehalt von halogeniertem Butylgummi der Schutzschicht 30 bis 100 Gewichtsteile auf der Grundlage von 100 Gewichtsteilen des Gummibestandteils beträgt.

13. Luftreifen nach einem der Ansprüche 1 bis 12, wobei die Innenfläche der Schutzschicht ferner mit einer Trennschicht abgedeckt ist.

14. Luftreifen nach Anspruch 13, wobei die Trennschicht mindestens ein Material ist, das aus Methylpentencopolymer, Polyethylen, Polypropylen, Polyethylenterephthalat, Polybutylenterephthalat, Polyethylennaphthalat, Polybutylennaphthalat, Nylon 6, Nylon 66 und Nylon-6/66-Copolymer ausgewählt ist.

15. Luftreifen nach einem der Ansprüche 1 bis 14, hergestellt mit Hilfe eines Verfahrens zum in einer Formstufe des Luftreifens erfolgenden Präparieren eines Laminatbahnteils, das (i) einen Innenseelenschicht, (ii) eine Schutzschicht und optional (iii) eine Trennschicht enthält, anschließendes Wickeln des resultierenden Bahnteils um eine Formtrommel und Spleißen desselben.

16. Luftreifen nach Anspruch 15, wobei das Laminatbahnteil ein zweischichtiger Aufbau aus einer Innenseelenschicht und Schutzschicht ist.

17. Luftreifen nach Anspruch 15, wobei das Laminatbahnteil ein dreischichtiger Aufbau ist, in dem eine Innenseelenschicht zwischen einer Gummischicht und einer Schutzschicht eingefügt ist.

18. Luftreifen nach Anspruch 17, wobei sich die Zusammensetzung der Schutzschicht des Laminatbahnteils von der der Gummischicht unterscheidet.

19. Luftreifen nach Anspruch 17 oder 18, wobei das Laminatbahnteil ein vierschichtiger Aufbau ist, der eine Bindeschicht zum Verbinden der Innenseelenschicht und der Gummischicht dazwischen enthält.

20. Luftreifen nach einem der Ansprüche 17 bis 19, wobei ein Teil oder die Gesamtheit der Schutzschicht und der Gummischicht, die auf der Gegenseite der Innenseelenschicht laminiert sind, voneinander unterschiedlich gefärbt sind, um so die Ober- und Unterseite des Laminatbahnteils leicht identifizierbar zu machen.

21. Luftreifen nach einem der Ansprüche 17 bis 20, wobei ein Oberflächenreliefmuster auf mindestens eine Oberfläche eines Teils oder der Gesamtheit der Schutzschicht oder der Gummischicht aufgebracht ist, die auf der Gegenseite der Innenseelenschicht laminiert sind, um so die Oberund Unterseite des Laminatbahnteils leicht identifizierbar zu machen.

## Revendications

1. Bandage pneumatique utilisant un élastomère thermoplastique pour une couche de revêtement intérieure comprenant une matrice de résine thermoplastique dans laquelle un composant de caoutchouc est dispersé, où une surface de ladite couche de revêtement intérieure est recouverte d'une couche de protection, où la couche de protection comprend un caoutchouc naturel époxydé qui est situé à la surface intérieure du bandage.

2. Bandage pneumatique selon la revendication 1, dans lequel le taux époxydé du caoutchouc naturel époxydé est de 25 à 65%.

3. Bandage pneumatique selon la revendication 1 ou 2, dans lequel la teneur en caoutchouc naturel époxydé de la couche de protection est de 10 à 70 parties en poids basé sur 100 parties en poids du composant de caoutchouc.

4. Bandage pneumatique selon l'une quelconque des revendications 1 à 3, dans lequel une teneur en caoutchouc naturel de la couche de protection est de 20 à 90 parties en poids basé sur 100 parties en poids de l'ingrédient de caoutchouc.

5. Bandage pneumatique selon l'une quelconque des revendications 1 à 4, dans lequel la couche de protection contient un agent d'adhésivité et une huile de résine.

6. Bandage pneumatique selon la revendication 5, dans lequel l'agent d'adhésivité de la couche de protection contient au moins un condensat de tert-butyle phénol et de l'acétylène.

7. Bandage pneumatique selon la revendication 6, dans lequel la couche de protection contient 3 à 15 parties en poids du condensat de tert-butyle phénol et d'acétylène basé sur 100 parties en poids du composant de caoutchouc.

8. Bandage pneumatique selon l'une quelconque des revendications 5 à 7, dans lequel la teneur en huile de résine de la couche de protection représente 3 à 15 parties en poids basé sur 100 parties en poids du composant de caoutchouc.

9. Bandage pneumatique selon la revendication 1, dans lequel la couche de protection contient au moins un caoutchouc butyle halogéné.

10. Bandage pneumatique selon la revendication 9, dans lequel le caoutchouc butyle halogéné est un copolymère bromé d'isoprène-isobutylène.

11. Bandage pneumatique selon la revendication 9, dans lequel le caoutchouc butyle halogéné est un copolymère bromé de para-méthyle-styrène - isobutylène.

12. Bandage pneumatique selon l'une quelconque des revendications 9 à 11, dans lequel la teneur totale du caoutchouc butyle halogéné de la couche de protection représente 30 à 100 parties en poids basé sur 100 parties en poids de l'ingrédient de caoutchouc.

13. Bandage pneumatique selon l'une quelconque des revendications 1 à 12, dans lequel la surface intérieure de la couche de protection est recouverte en outre avec une couche de séparation.

14. Bandage pneumatique selon la revendication 13, dans lequel la couche de séparation est au moins un matériau sélectionné parmi un copolymère de méthylepentène, polyéthylène, polypropylène, polyéthylène téréphtalate, polybutylène téréphtalate, polyéthylène naphtalate, polybutylène naphtalate, nylon 6, nylon 66 et copolymère de nylon 6/66.

15. Bandage pneumatique selon l'une quelconque des revendications 1 à 14, fabriqué en utilisant une méthode de préparation, à l'étape de moulage du bandage pneumatique, d'un élément de feuille laminée contenant (i) une couche de revêtement intérieure, (ii) une couche de protection et, en option (iii) une couche de séparation, à enrouler ensuite l'élément de feuille obtenu autour d'un tambour de moulage et en épissant celui-ci.

16. Bandage pneumatique selon la revendication 15, dans lequel l'élément de feuille de laminé est une structure en deux couches d'une couche de revêtement intérieure et d'une couche de protection.

17. Bandage pneumatique selon la revendication 15, dans lequel l'élément de feuille laminée est une structure en trois couches, dans laquelle une couche de revêtement intérieure est prise en sandwich entre une couche de caoutchouc et une couche de protection.

18. Bandage pneumatique selon la revendication 17, dans lequel la composition de la couche de protection de l'élément de feuille laminée diffère de celle de la couche de caoutchouc.

19. Bandage pneumatique selon la revendication 17 ou 18, dans lequel l'élément de feuille laminée est une structure en quatre couches contenant une couche de liaison pour la liaison de la couche de revêtement intérieure et la couche de caoutchouc entre elles.

20. Bandage pneumatique selon l'une quelconque des revendications 17 à 19, dans lequel une partie ou l'ensemble de la couche de protection et de la couche de caoutchouc laminée sur le côté opposé de la couche de revêtement intérieure sont colorées différemment l'une de l'autre afin de rendre ainsi les côtés supérieur et inférieur de l'élément de feuille laminée facilement identifiables.

21. Bandage pneumatique selon l'une quelconque des revendications 17 à 20, dans lequel un motif à relief de surface est appliqué à au moins une surface d'une partie ou de l'ensemble de la couche de protection ou de la couche de caoutchouc laminée sur le côté opposé de la couche de revêtement intérieure pour rendre ainsi les côtés supérieur et inférieur de l'élément de feuille laminée facilement identifiables.
